# EUROPEAN PATENT SPECIFICATION

(11) **EP 3 665 950 B1**
(45) Date of publication and mention of the grant of the patent: **17.09.2025**
(21) Application number: 17920898.8
(22) Date of filing: 11.08.2017
(51) Int. Cl.: G08G 5/00, G08G 5/26, G08G 5/55, H04W 36/32, H04W 36/24, H04W 28/02, H04W 48/20, H04W 84/04, B64C 39/02, H04W 36/00, H04W 40/20, H04B 7/185

(54) **INFORMATION EXCHANGE FOR AN UNMANNED AERIAL VEHICLE**
INFORMATIONSAUSTAUSCH FÜR EIN UNBEMANNTES LUFTFAHRZEUG
ÉCHANGE D'INFORMATIONS POUR UN VÉHICULE AÉRIEN SANS PILOTE

(43) Date of publication of application: 17.06.2020
(73) Proprietor: Nokia Technologies Oy, 02610 Espoo (FI)
(72) Inventor: KOZIOL, Dawid, 67-200 Glogow (PL); KOVÁCS, István Zsolt, 9000 Aalborg (DK); WIGARD, Jeroen, 9270 Aalborg (DK); STANCZAK, Jedrzej, 61-392 Poznan (PL)
(74) Representative: Script Intellectual Property LLP
(86) International application number: PCT/FI2017/050568
(87) International publication number: WO 2019/030425

(56) References cited:
- WO-A1-2005/027556
- US-A1- 2015 036 663
- US-A1- 2016 300 493
- US-B1- 9 467 922
- US-B1- 9 467 922
- "Mobility enhancement for drones", 3GPP TSG-RAN WG2 MEETING #98, 14 May 2017 (2017-05-14), Hangzhou , China, pages 2, XP051275500

## Description

### BACKGROUND:

### Field:

Various communication systems may benefit from an improved exchange of information pertaining to an unmanned aerial vehicle (UAV). For example, certain communication systems may benefit from the transmittal of information related to a planned route of the UAV to a cellular network.

### Description of the Related Art:

The increasing commercial use of UAVs, otherwise known as drones, has lead to the introduction of specific flight regulations directed to the flight routes of UAVs in various countries around the world. Some of the main requirements dictate that the UAVs should always be controllable by a human operator, and that the UAVs should fly within a certain maximum geographical distance, altitude, and/or visibility range. To meet these regulations, it is important to establish reliable communication with the UAVs. Traditionally, control of UAVs has been achieved by means of a radio connection utilizing Wireless Local Area Network (WLAN) technology. While the use of WLAN technology is a good choice for short-range, low-cost UAVs that are used for non-commercial purposes, commercial UAVs may require technology that can be reliably used for longer ranges.

Several service providers have started using specialized radio link technologies, some of which are based on modified WLAN or other proprietary technology. Recent developments, however, have focused on UAVs becoming fully or partly autonomous, enabling, for example, rescue services, delivery of goods, and/or monitoring by the UAVs. Such use cases require constant connectivity with UAVs within a large area. To enable such use cases, cellular networks may be used to communicate with the UAVs due to the extensive existing infrastructure of cellular networks. For example, third generation partnership project (3GPP) technology, such as third generation (3G), Long Term Evolution (LTE), LTE-advanced, fourth generation (4G) technology, and/or fifth generation (5G) technology, may be utilized to facilitate communication with the UAVs.

Even if UAVs were connected to a cellular network, current cellular networks are not designed to service UAVs that often fly at a certain altitude above ground level. Depending on the area in which the UAVs are flying, regulations allow the UAVs to fly at an altitude of up to 150 or 300 meters. Base stations of current mobile networks, however, are optimized for supporting ground user equipment, not for flying UAVs. Cellular network antennas, for example, are typically tilted downwards. In addition, UAVs in higher altitudes are subject to potential interference from a larger number of detected neighboring cells, as opposed to a grounded user equipment.

US9467922 discloses a system where a location and possibly route of a UE may be used to help determine which cells to handover to. The UE may be in a vehicle such as an unmanned aerial vehicle UAV.

### SUMMARY

According to certain embodiments, there is provided a method according to claim 1.

An apparatus, in certain embodiments, may include means for performing a process the process including the method of claim 1.

According to certain embodiments, a non-transitory computer-readable medium encoding instructions that, when executed in hardware, perform a process including the method of claim 1.

### BRIEF DESCRIPTION OF THE DRAWINGS:

For proper understanding of the invention, reference should be made to the accompanying drawings, wherein:
Figure 1 illustrates an example of a signal flow diagram according to certain embodiments.
Figure 2 illustrates an example of a signal flow diagram according to certain embodiments.
Figure 3 illustrates an example of a signal flow diagram according to certain embodiments.
Figure 4 illustrates an example of a signal flow diagram according to certain embodiments.
Figure 5 illustrates an example of a flow diagram according to certain embodiments.
Figure 6 illustrates an example of a flow diagram according to certain embodiments.
Figure 7 illustrates an example of a system according to certain embodiments.

### DETAILED DESCRIPTION:

Certain embodiments may provide for high service quality and robust connections to UAVs, while using the existing cellular communications infrastructure. The embodiments may therefore optimize connections between the cellular network and the UAVs without impacting the quality of experience of ground users. Some embodiments may also decrease the number of radio link and handover failures, while also allowing the UAVs to remain mobile within the cellular network.

To achieve the above significant improvements to the functioning of a network, and the UAVs interacting with the network, certain embodiments may allow for providing the cellular network with location information and/or timing information relating to a planned route of the UAV. In other words, information about the UAV's planned route may be provided to the network in a format that may be used for mobility configuration optimization and handover procedure execution. The information may be provided to the network from a UAV traffic management system (UTM), also referred to as a traffic management system of the UAV. The UTM may be a system that is used to monitor and/or set the UAV route. The UTM may operate on an application server located outside the cellular network. In certain embodiments, the UTM may also provide the network with updated route information, which may be a change in the current route information of the UAV.

The UTM may be interconnected to the 3GPP core network (CN), and may be or timing information of a planned route for the unmanned aerial vehicle. The process may also include establishing a connection between the unmanned aerial vehicle and a cellular network via the network entity based on the connection establishment request.

According to certain examples, an apparatus may include at least one memory including computer program code, and at least one processor. The at least one memory and the computer program code may be configured, with the at least one processor, to cause the apparatus at least to receive a connection establishment request at an unmanned aerial vehicle from a traffic management system via a cellular network. The request may include at least one of location information or timing information of a planned route for the unmanned aerial vehicle. The at least one memory and the computer program code may also be configured, with the at least one processor, to cause the apparatus at least to establish a connection between the unmanned aerial vehicle and the cellular network based on the connection establishment request.

A method, in certain examples, may include receiving a connection establishment request at an unmanned aerial vehicle from a traffic management system via a cellular network. The request may include at least one of location information or timing information of a planned route for the unmanned aerial vehicle. The method may also include establishing a connection between the unmanned aerial vehicle and the cellular network based on the connection establishment request.

An apparatus, in certain examples, may include means for receiving a connection establishment request at an unmanned aerial vehicle from a traffic management system via a cellular network. The request may include at least one of location information or timing information of a planned route for the unmanned aerial vehicle. The apparatus may also include means for establishing a connection between the unmanned aerial vehicle and the cellular network based on the connection establishment request.

According to certain examples, a non-transitory computer-readable medium encoding instructions that, when executed in hardware, perform a process. The process may include receiving a connection establishment request at an unmanned aerial vehicle from a traffic management system via a cellular network. The request may include at least one of location information or timing information of a planned route for the unmanned aerial vehicle. The process may also include establishing a connection between the unmanned aerial vehicle and the cellular network based on the connection establishment request.

According to certain other examples, a computer program product may encode instructions for performing a process. The process may include receiving a connection establishment request at an unmanned aerial vehicle from a traffic management system via a cellular network. The request may include at least one of location information or timing information of a planned route for the unmanned aerial vehicle. The process may also include establishing a connection between the unmanned aerial vehicle and the cellular network based on the connection establishment request.

### BRIEF DESCRIPTION OF THE DRAWINGS:

For proper understanding of the invention, reference should be made to the accompanying drawings, wherein:

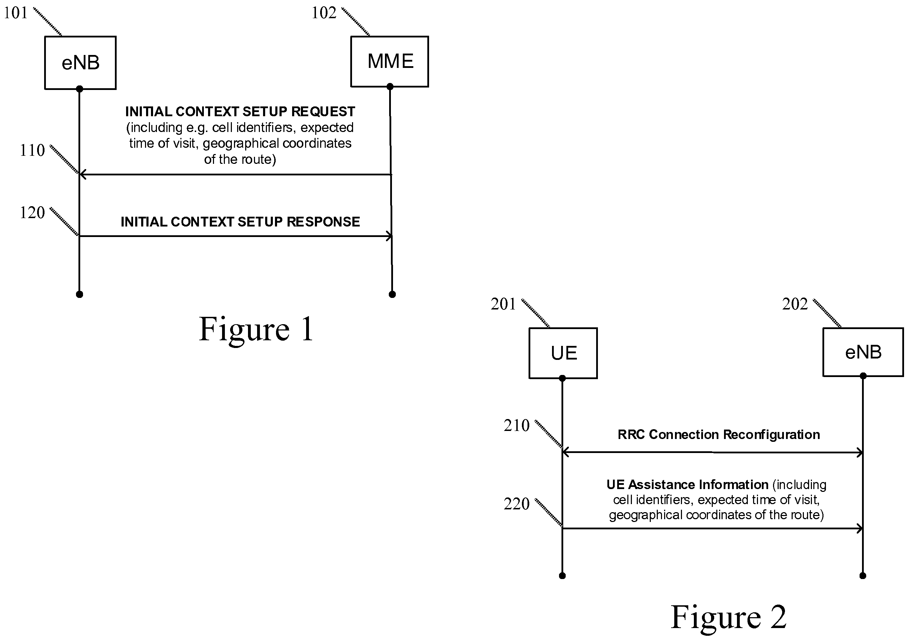

Figure 1 illustrates an example of a signal flow diagram according to certain embodiments.
Figure 2 illustrates an example of a signal flow diagram according to certain embodiments.

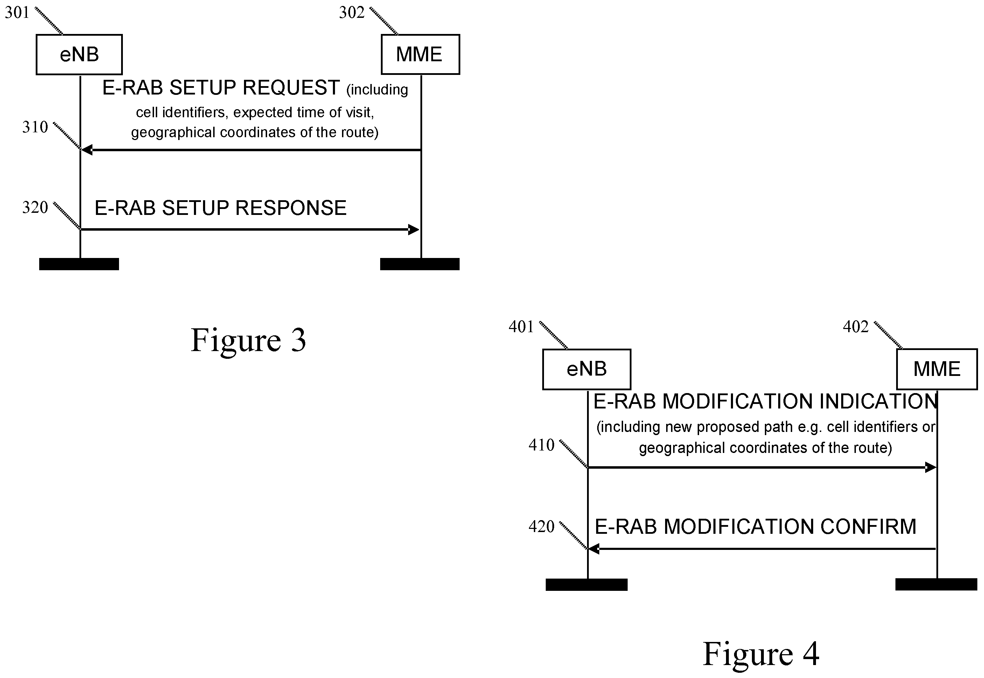

Figure 3 illustrates an example of a signal flow diagram according to certain embodiments.
Figure 4 illustrates an example of a signal flow diagram according to certain embodiments.

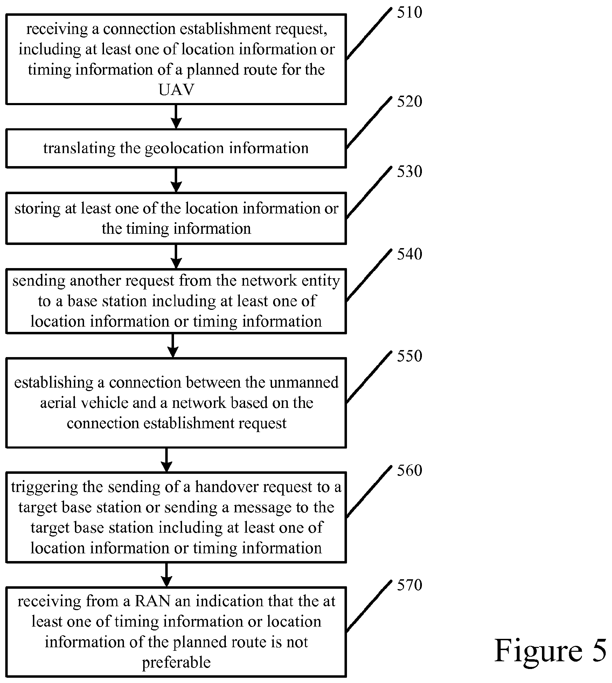

Figure 5 illustrates an example of a flow diagram according to certain embodiments.

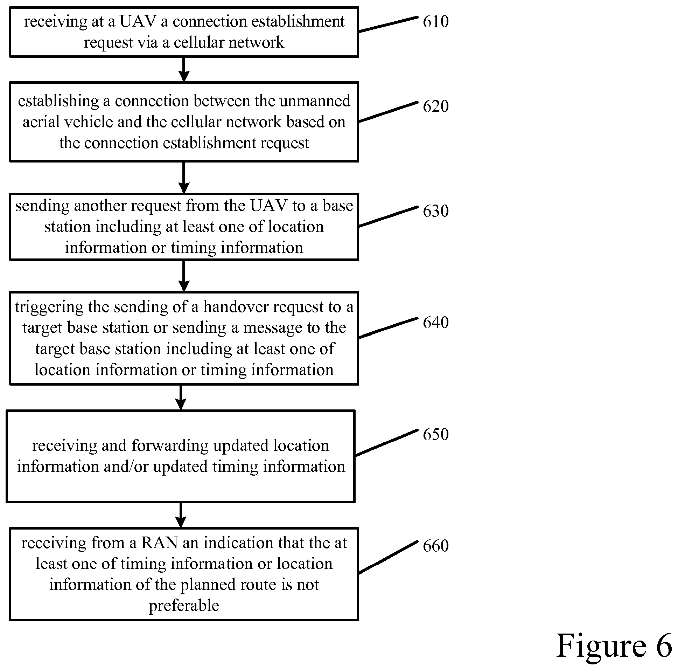

Figure 6 illustrates an example of a flow diagram according to certain embodiments.

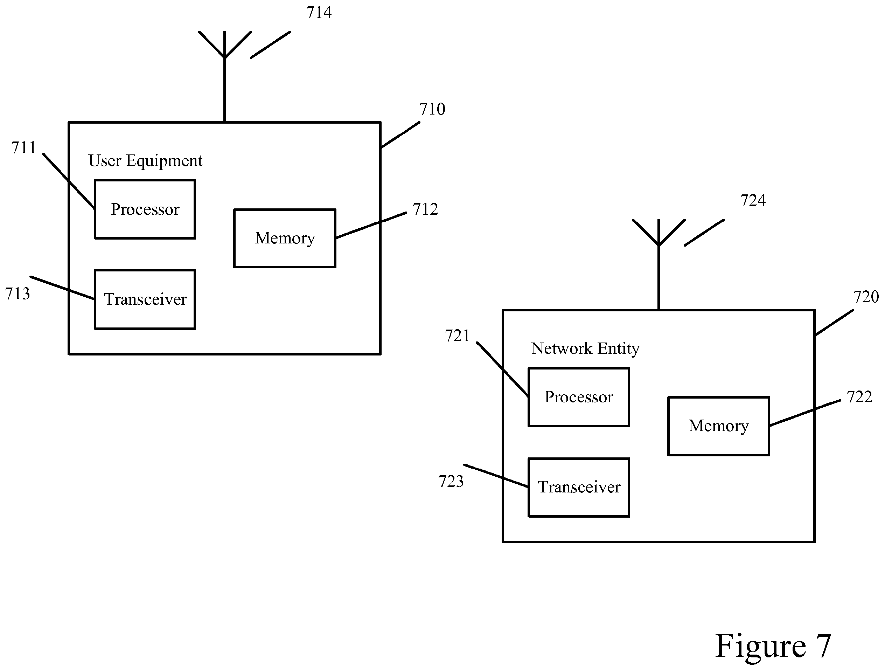

Figure 7 illustrates an example of a system according to certain embodiments.

### DETAILED DESCRIPTION:

Certain embodiments may provide for high service quality and robust connections to UAVs, while using the existing cellular communications infrastructure. The embodiments may therefore optimize connections between the cellular network and the UAVs without impacting the quality of experience of ground users. Some embodiments may also decrease the number of radio link and handover failures, while also allowing the UAVs to remain mobile within the cellular network.

To achieve the above significant improvements to the functioning of a network, and the UAVs interacting with the network, certain embodiments may allow for providing the cellular network with location information and/or timing information relating to a planned route of the UAV. In other words, information about the UAV's planned route may be provided to the network in a format that may be used for mobility configuration optimization and handover procedure execution. The information may be provided to the network from a UAV traffic management system (UTM), also referred to as a traffic management system of the UAV. The UTM may be a system that is used to monitor and/or set the UAV route. The UTM may operate on an application server located either within or outside the cellular network. In certain embodiments, the UTM may also provide the network with updated route information, which may be a change in the current route information of the UAV. As an alternative to the UTM, any other system that monitors and/or sets the UAV route may be used.

The UTM may be interconnected to the 3GPP core network (CN), and may be used to control the UAV using connectivity service delivered by the cellular network, such as an LTE network. In certain embodiments, the UTM may initiate a connection and/or communication with a UAV via a 3GPP cellular network. In embodiments in which the UAV's flying route is known, or the UAV's operating area is known, the UTM may deliver the flying route information to a network entity located within the network, such as a CN entity. In some embodiments, the information of the flying route may be included in the connection establishment request, while in other embodiments the information may be transmitted as part of a different message. The flying route information may include location information and/or timing information of the UAV's planned route.

As discussed above, the UTM may be aware of the flying route of the UAV. In some embodiments, the UAV may be used to deliver a package from point A to point B, or the UAV may be used for surveillance that covers a given path on a regular basis. For example, the surveillance path may be a daily or a weekly path taken by the UAV. The flying route may be defined based on the flight path taken by the UAV from point A to point B, or the given path of the UAV during surveillance.

In certain embodiments, the location information of the flying route may be provided to the network entity in the form of an LTE cell identifier, when the UTM has access to such information. In other words, the flying route of the UAV may be defined by the LTE cells located along the planned route of the UAV. A network operator, for example, may maintain a database including geolocation information of its network nodes, base stations, and/or cells. The database may be accessible by the UTM and/or to the customers of the network, which may allow the UTM to transmit the location information of the planned route of the UAV in the form of network node, base station, and/or cell identifiers.

In some other embodiments, the network operator may not provide the UTM with access to the above database. When the UTM has no access to the database, instead of network node, base station, or cell identifiers, the UTM may provide the network entity with geolocation information, for example, Global Positioning System (GPS) or Global Navigation Satellite System (GLONASS) coordinates. In some embodiments, along with the GPS and/or GLONASS coordinates, the UTM may include a radius within which the UAV is expected to move. The network entity, which may be, for example, a CN entity, may then translate the received geolocation information into the network node, base station, and/or cell identifiers.

In addition to transmitting location information, in the form of geolocation information, or base station and/or cell identifiers, the UTM may also provide the network entity with timing information. For example, the timing information may include an expected arrival time range of the UAV at a certain location. In another example, the timing information may include an expected time range of operating a UAV in a certain area. The time range may be a period of time in which the UAV is expected to arrive at a certain location, or a period of time in which the UAV is expected to operate in a certain area.

In certain embodiments, in addition to the sending of the connection establishment request to the network entity, the UTM may also indicate to the network entity that a certain UAV is likely to operate in the same area and/or cover the same route in the future. For example, the UAV may be a special or a single-purpose drone whose location or timing information are used again in a future point in time. Upon receiving such an indication, the network entity may store the location information and/or the timing information at the network entity or at another network entity. The information may be stored as part of the UAV's subscription and/or in association with a UAV's context. In some embodiments, the indication may be included as part of the connection establishment request that includes the location information and/or the timing information sent to the network entity from the UTM.

In certain embodiments, the network entity, which may be a CN entity, may establish a connection between the UAV and the network based on the connection establishment request received from the UTM. As part of establishing a connection to the UAV, the network entity may send at least one paging message to establish a connectivity with a UAV. The establishment request may include the location information and/or the timing information. For example, the establishment request may include a network node, base station, and/or cell identifier, as well as a time period within which UAV is expected to visit the network node, base station, or cell.

Once the UAV answers or responds to the paging message received from the network entity, the network entity may send a request to a radio access network (RAN) to establish a connection to carry the traffic to/from the UAV. In certain embodiments, the request transmitted to the RAN may include a list of cells or base stations that fall within the flying route of the UAV. The radio access network may include at least one base station and/or at least one network node, for example an eNB, which may receive the request from the network entity.

Upon receiving the information from the network entity, the network node and/or the base station may identify one or more neighboring other network nodes and/or base stations from the list. The base station and/or network nodes may then send a handover request to the one or more neighboring other cells or neighboring other network nodes and/or base stations, also referred to as target cells, target network nodes, and/or target base stations. The handover request may be transmitted in advance of the UAV entering a target cell, and may even be transmitted before receiving a measurement report from UAV at its serving base station and/or network node. The handover request may include a context of the UAV, the location information, the timing information of the UAV, and/or the list of one or more neighboring other cells, network nodes, or base stations.

In some embodiments, the UAV upon establishing the connection with the cellular network or upon entering a new cell, may report mobility history information of the UAV to the network entity or the base station. The mobility history information may be collected by the UAV. The mobility history information, for example, may include identifiers of the cells visited in the past and/or a time range in which the UAV stayed in those previously visited cells. The mobility history information may be used by the serving cell of the UAV to deduce the next cell or the target cell to be visited by the UAV. The base station and/or the network entity may then prepare the next cell or the target cell for handover in advance. In other embodiments, UAV, rather than the base station and/or the network entity, may prepare the next cell or the target cell for handover in advance. The UAV, in certain embodiments, may also analyze the mobility history information and/or use the mobility history information to predict the next or target cell.

In certain other embodiments, the network entity, such as a CN entity, may directly transmit a message informing the base stations and/or network nodes within the UAV's flying path or area of operation. In other words, the UAV context, the location information, and/or the timing information may be provided to the base stations and/or the network nodes by the network entity in advance of the UAV entering the cells in which the target base stations are located. Unlike previous embodiments, in which neighboring base stations would provide information to one another, in this embodiment a core network entity may provide the context and/or information directly to the base stations. The target base stations may store the received context and information in their memory. The stored context and information may allow for a successful connection reestablishment in case handover between a serving and a target cell is not executed on time. Storing the context and information may also preserve network resources, by limiting the need to retransmit the UAV context or the location and/or timing information with each handover request.

As discussed above, when handover of the UAV is performed in the cellular network, the list of network nodes or base stations may be forwarded to the target cell. Based on this, the target cell, after becoming the serving cell, may identify its own neighbors on the list. The target cell may then send the identified neighbors the UAV context in order to prepare the target cell for a possible handover of the UAV.

In some embodiments, the location information and/or the timing information provided to the network entity by the UTM may be changed or updated. The change, for example, may be caused by changing the flight route of the UAV, the reaction of the UTM or network operator's in response to a current situation, or if a new event occurs. In other embodiments, changes to the UAV's planned route may be caused by an inability to accurately predict the location information and/or the timing information in advance of transmitting the connection request from the UTM to the network entity. The change may also be a result of the UAV indicating a required change of path to the UTM, which may be sent using an established control link. The UAV may decide to send the indication based on measurements taken by the UAV. For example, the measurements may include at least one of interference, cell load, or received signal power or quality. In other embodiments, the UAV may decide to send the indication based on information received from RAN and/or information received directly from other UAVs in proximity. The UTM may thereof be able to update the location and/or the timing information whenever needed.

The network entity, in certain embodiments, may therefore receive updated timing and/or location information from the UTM. While the connection between the UTM and the cellular network is established, transmission of the updated information may utilize a dedicated message on an interface between the UTM and the CN. The updated information may then transmit the CN entity to the base station and/or network node. In other embodiments, the UTM may transmit the updated location and/or timing information to the UAV, which may then forward the updated information to the base stations.

The network entity, such as a CN entity, in certain other embodiments, may receive an indication from the radio access network that the location information and/or the timing information of the planned route of the UAV is not preferable. For example, the indication may be transmitted when a maintenance window is planned for one or more base station. In another example, the indication may be transmitted when the expected or experienced traffic load is high. The radio access network may also suggest an alternative route for the UAV and/or an alternative set of cells for reaching an endpoint of the route of the UAV. The set of cells may be located on different frequencies. The network entity may forward the indication that the planned route is not preferable to the UTM and/or UAV. The CN entity may then receive an acknowledgement from the UAV that the alternative route or set of cells has been adopted by the UAV. In certain embodiments, the UTM may decide, even when receiving the indication from the network, that the alternative route may not beneficial or that the proposed alternative route may prevent the UAV from meeting its purpose. In such embodiments, the UTM may decide not to change UAV's path, even though the UTM may be aware that not changing the path may lead to a degradation of service quality.

The UAV, knowing its planned path or route, may provide the information to the serving base station or network node in the cellular network, in certain embodiments. The UTM may be used to initiate a connection with a UAV via a cellular network. Instead of transmitting the information to a network entity in the CN, however, the UTM may transmit the location and/or timing information of the planned UAV route directly to the UAV itself. The UAV may then forward the location and/or timing information of the planned UAV route to the base station or the network node. The serving base station and/or the serving network node may use the received location and/or timing information as discussed in some of the above embodiments. In some embodiments, the UAV may trigger, via a radio resource control signal to a serving base station or network node, a UAV specific information exchange between the CN entity and the base station or the network node.

Figure 1 illustrates a signal flow diagram according to certain embodiments. In the embodiment of Figure 1, an interaction between a network entity 102, such as a mobility management entity (MME), and a base station 101, such as an enhanced NodeB (eNB), is illustrated. An initial context setup procedure, as defined in 3GPP TS 36.413, may be modified to include at least one of a context of the UAV, the location information of the planned route of the UAV, the timing information of the planned route of the UAV, and/or the list of one or more neighboring other network nodes or base stations.

As shown in Figure 1, MME 102 may transmit an initial context setup request message, which may be referred to as another request, to eNB 101, as shown in step 110. The initial context setup request may include, for example, cell identifiers, expected time of visit, and/or geographical coordinates of the UAV route. In other words, the another request may include location information and/or timing information. In step 120, eNB 101 may send an initial context setup response to MME 102.

Figure 2 illustrates a flow diagram according to certain embodiments. In particular, Figure 2 illustrates a base station, such as eNB 202, performing a radio resource control (RRC) connection reconfiguration with a UAV user equipment (UE) 201. In some embodiments, the existing UE assistance information, as defined in 3GPP TS 36.331, may be enhanced with pertinent parameters such as location information and/or timing information.

In step 210, eNB 202 and UAV UE 201 may perform an RRC connection reconfiguration. In step 220, UAVUE 201 may transmit UE assistance information to eNB 202. The UE assistance information may include at least one of a context of the UAV, the location information of the planned route of the UAV, the timing information of the planned route of the UAV, and/or the list of one or more neighboring other network nodes or base stations. For example, the UE assistance information shown in Figure 2 may include cell identifiers, expected time of visit, and/or geographical coordinates of the route. Including such information as part of the UE assistance information may allow for the network to prepare the network entities to handle the imminent UAV traffic from a particular UAV UE. The example shown in Figure 2 may be applicable to an embodiment in which the UAV informs the base stations in the network of the location information and/or timing information, instead of a CN entity informing the base stations.

Figure 3 illustrates a flow diagram according to certain embodiments. In particular, Figure 3 illustrates an E-UTRAN radio access bearer (E-RAB) setup procedure between a network entity 302, such as an MME, and a base station, such as an eNB 301. In certain embodiments, when transmitting the E-RAB setup request, core network entity MME 302 may include at least one of a context of the UAV, the location information of the planned route of the UAV, the timing information of the planned route of the UAV, and/or the list of one or more neighboring other network nodes or base stations. For example, in step 310, MME 302 may transmit an E-RAB setup request message, including cell identifiers, expected time of visit, and/or geographical coordinates of the route. In step 320, eNB 320 may respond by sending the E-RAB setup response.

Figure 4 illustrates a flow diagram according to certain embodiments. In particular, Figure 4 illustrates an embodiment in which a RAN entity, such as an eNB 401, determines that an update is needed to the UAV UE location information and/or timing information, as discussed above. Traditional 3GPP E-RAB modification indication procedures are described in 3GPP TS 36.413. As shown in Figure 4, eNB 401 may transmit an E-RAB modification indication to a core network entity, such as MME 402, as shown in step 410. The E-RAB modification indication may include a new proposed path or route for the UAV. For example, the new proposed route may be described by eNB 401 using one or more cell identifiers or geographic coordinates of the route. In step 420, MME 402 may transmit an E-RAB modification confirmation to eNB 401.

In addition to the initial context setup request, RRC connection reconfiguration, E-RAB setup request, and E-RAB modification indication shown in Figures 1-4 any other messages transmitted between a CN entity, one or more base stations, and/or a UAV UE may be amended to include at least one of information location, timing information, and/or UAV UE context information. For example, a handover request message may include location information and/or timing information.

Figure 5 illustrates a flow diagram according to certain embodiments. In particular, Figure 5 illustrates an embodiment of a method performed by a network entity, such as a core network entity. For example, the network entity may be an MME, as shown in Figures 1, 3, and 4. In step 510, the network entity may receive a connection establishment request from a UTM of a UAV. The request may include at least one of location information and/or timing information of a planned route of the UAV. In certain embodiments, the location information may include at least one of a cell identifier or a base station identifier, an operating area, or geolocation information. The timing information may include an expected arrival time range at a given location or expected time range of operating the UAV in a given area.

In some embodiments, in which the UTM does not have access to the database of the network, the network entity may receive the location information in the form of geolocation information. The network entity may then translate the geolocation information into one or more cell identifiers or one or more base station identifiers, as shown in step 520. In certain embodiments, the network entity may store at least one of the location information and/or the timing information, as shown in step 530. The storing of the location information and/or the timing information may be triggered by an indication included in the connection establishment request received from the UTM. The indication may indicate to the network entity that the location information may be used for a future route of the UAV. Storing the location and/or timing information may therefore prevent the UTM from having to retransmit the information, thereby reducing the amount of network resources used by the UTM.

In step 540, the network entity may send another request to the base station in the network. The another request may include at least one of the location information and/or the timing information. The sending of the another request may inform the base station that it is location in the planned path or route of the UAV. In step 550, the network entity may establish a connection between the UAV and the cellular network based on the connection establishment request.

In step 560, the network entity may trigger the base station to transmit a handover request to a target cell or target base station. Alternatively, the network entity may directly transmit a message to the target base station. The handover request and/or the message may include at least one of the location information and/or the timing information. In some embodiments, the handover request or the message transmitted to the target cell or target base station may also include a list of one or more other target base stations. The reception of the list may trigger the target base station to forward the context of the UAV to a neighboring target base station included in the list. In certain embodiments, at least one of the handover request or the message may be transmitted in advance to prepare the target base station for a handover. At least one of the handover request or the message may be based on a mobility history information of the unmanned aerial vehicle.

In certain embodiments, as shown in step 570, the network entity may receive from a RAN entity, such as an eNB, an indication that at least one of the location information or the timing information of the planned route of the UAV is not preferable. The received indication that the planned route of the UAV is not preferable may include an alternative path or an alternative set of cells for reaching an endpoint of the route of the UAV. The network entity may forward the indication that the planned route is not preferable to the UTM and/or UAV. In certain embodiments, the UTM may decide not to change the UAV's path, even after receiving the indication.

Figure 6 illustrates a flow diagram according to certain embodiments. In particular, Figure 6 illustrates an embodiment of a method performed by a UAV UE. In step 610, the UAV UE may receive a connection establishment request from a UTM via a cellular network. The request may include at least one of location information and/or timing information of a planned route for the UAV. In step 620, a connection may be established between the UAV and the cellular network based on the connection establishment request. In step 630, the UAV may send another request to a base station, such as an eNB. The another request may include at least one of the location information and/or the timing information.

In step 640, the UAV may trigger the base station in the network to transmit a handover request to a target station. The handover request may include at least one of the location information or timing information. In certain embodiments, at least one of the handover request or the message may be transmitted in advance to prepare the target base station for a handover. The handover request and/or the message may be based on a mobility history information collected by the unmanned aerial vehicle. Alternatively, or in addition to, in step 640 the UAV may transmit a message from the UAV to the target base station. The message may also include at least one of the location information and/or timing information. The UAV may then receive a message from the UTM including at least one of updated location information and/or updated timing information, as shown in step 650.

The UAV may forward at least one of the updated location information and/or the updated timing information to the base station. In step 660, the UAV may receive an indication from a RAN entity, such as a base station, that at least one of the location information or the timing information of the planned route of the UAV is not preferable. The received indication that the planned route of the UAV is not preferable may include an alternative path or an alternative set of cells for reaching an endpoint of the route of the UAV.

Figure 7 illustrates a system according to certain embodiments. It should be understood that each signal or block in Figures 1, 2, 3, 4, 5, and 6 may be implemented by various means or their combinations, such as hardware, software, firmware, one or more processors and/or circuitry. In one embodiment, a system may include several devices, such as, for example, a network entity 720 or a UAV user equipment (UE) 710. The system may include more than one UE 710 and more than one network entity 720, although only one access node shown for the purposes of illustration. The network entity may be a CN entity, an MME, a network node, an access node, a base station, a 5G NodeB (5G-NB), server, host, or any of the other access or network node discussed herein. The user equipment may be any other type of commercial or noncommercial unmanned aerial vehicle or drone.

Each of these devices may include at least one processor or control unit or module, respectively indicated as 711 and 721. At least one memory may be provided in each device, and indicated as 712 and 722, respectively. The memory may include computer program instructions or computer code contained therein. One or more transceiver 713 and 723 may be provided, and each device may also include an antenna, respectively illustrated as 714 and 724. Although only one antenna each is shown, many antennas and multiple antenna elements may be provided to each of the devices. Higher category UEs generally include multiple antenna panels. Other configurations of these devices, for example, may be provided. For example, network entity 720 and UAV 710 may be additionally configured for wired communication, in addition to wireless communication, and in such a case antennas 714 and 724 may illustrate any form of communication hardware, without being limited to merely an antenna.

Transceivers 713 and 723 may each, independently, be a transmitter, a receiver, or both a transmitter and a receiver, or a unit or device that may be configured both for transmission and reception. In other embodiments, the UAVs or the network entity may have at least one separate receiver or transmitter. The transmitter and/or receiver (as far as radio parts are concerned) may also be implemented as a remote radio head which is not located in the device itself, but in a mast, for example. The operations and functionalities may be performed in different entities, such as nodes, hosts or servers, in a flexible manner. In other words, division of labor may vary case by case. One possible use is to make a network node deliver local content. One or more functionalities may also be implemented as virtual application(s) in software that can run on a server. A beamformer may be a type of transceiver.

In some embodiments, an apparatus, such as a network entity, may include means for carrying out embodiments described above in relation to Figures 1, 2, 3, 4, 5, and 6. In certain embodiments, at least one memory including computer program code can be configured to, with the at least one processor, cause the apparatus at least to perform any of the processes described herein.

Processors 711 and 721 may be embodied by any computational or data processing device, such as a central processing unit (CPU), digital signal processor (DSP), application specific integrated circuit (ASIC), programmable logic devices (PLDs), field programmable gate arrays (FPGAs), digitally enhanced circuits, or comparable device or a combination thereof. The processors may be implemented as a single controller, or a plurality of controllers or processors.

For firmware or software, the implementation may include modules or unit of at least one chip set (for example, procedures, functions, and so on). Memories 712 and 722 may independently be any suitable storage device, such as a non-transitory computer-readable medium. A hard disk drive (HDD), random access memory (RAM), flash memory, or other suitable memory may be used. The memories may be combined on a single integrated circuit as the processor, or may be separate therefrom. Furthermore, the computer program instructions may be stored in the memory and which may be processed by the processors can be any suitable form of computer program code, for example, a compiled or interpreted computer program written in any suitable programming language. The memory or data storage entity is typically internal but may also be external or a combination thereof, such as in the case when additional memory capacity is obtained from a service provider. The memory may be fixed/non-removable or removable.

The memory and the computer program instructions may be configured, with the processor for the particular device, to cause a hardware apparatus such as network entity 720 or UAV UE 710, to perform any of the processes described above (see, for example, Figures 1, 2, 3, 4, 5, and 6). Therefore, in certain embodiments, a non-transitory computer-readable medium may be encoded with computer instructions or one or more computer program (such as added or updated software routine, applet or macro) that, when executed in hardware, may perform a process such as one of the processes described herein. Computer programs may be coded by a programming language, which may be a high-level programming language, such as objective-C, C, C++, C#, Java, etc., or a low-level programming language, such as a machine language, or assembler. Alternatively, certain embodiments may be performed entirely in hardware.

Furthermore, although Figure 7 illustrates a system including a network entity 720 and UAV UE 710, certain embodiments may be applicable to other configurations, and configurations involving additional elements, as illustrated and discussed herein. For example, multiple user equipment devices and multiple network entities may be present, or other nodes providing similar functionality, such as nodes that combine the functionality of a UAV user equipment and an network entity, such as a relay node. The UAV UE 710 may likewise be provided with a variety of configurations for communication other than communication network node 720. For example, the UAV UE 710 may be configured for device-to-device, machine to machine, or UAV-UAV communication.

The above embodiments may provide for significant improvements to the functioning of a network and/or to the functioning of the network entities within the network. Specifically, certain embodiments may allow a traffic management system to transmit to a CN entity timing and/or location information of the planned route of the UAV. The timing and/or location information may also be transmitted to the base stations in the cellular network, and forwarded to the target cells in advance of the UAV's arrival. Such transmittals improve the connectivity of the UAV to the cellular network, as well as allowing for a high quality of service at the UAV. The transmittal of the location and/or timing information will also allow for mobility configuration optimization and/or improved handover execution between cells in the cellular network.

The features, structures, or characteristics of certain embodiments described throughout this specification may be combined in any suitable manner in one or more embodiments. For example, the usage of the phrases "certain embodiments," "some embodiments," "other embodiments," or other similar language, throughout this specification refers to the fact that a particular feature, structure, or characteristic described in connection with the embodiment may be included in at least one embodiment of the present invention. Thus, appearance of the phrases "in certain embodiments," "in some embodiments," "in other embodiments," or other similar language, throughout this specification does not necessarily refer to the same group of embodiments, and the described features, structures, or characteristics may be combined in any suitable manner in one or more embodiments.

### Partial Glossary

- 3GPP: Third Generation Partnership Project
- CN: Core Network
- eNB: Enhanced node B (LTE base station)
- LTE: Long Term Evolution
- MME: Mobility Management Entity
- RAN: Radio Access Network
- UE: User Equipment
- UAV: Unmanned Aerial Vehicle
- UTM: UAV Traffic Management

## Claims

1. A method comprising:
receiving (510) a connection establishment request at a Mobile Management Entity (102, 302, 402) from a traffic management system of an unmanned aerial vehicle, the traffic management system being located on an application server outside of the cellular network, and wherein the request comprises location information and timing information of a planned route for the unmanned aerial vehicle; and
establishing (550) a connection between the unmanned aerial vehicle and a cellular network via the Mobile Management Entity based on the connection establishment request.

2. The method according to claim **1,** wherein the location information comprises at least one of a cell identifier or a base station identifier, an operating area, or geolocation information.

3. The method according to claim **1,** wherein the timing information comprises an expected arrival time range at a given location or an expected time range of operating the unmanned aerial vehicle in a given area.

4. The method according to claim **1,** further comprising:
storing at least one of the location information or the timing information at the Mobile Management Entity, wherein the connection establishment request comprises an indication that the location information will be used for a future route of the unmanned aerial vehicle.

5. The method according to claim **1,** wherein the establishing of the connection comprises:
transmitting another request from the Mobile Management Entity to a base station in the network, wherein the another request comprises at least one of the location information or the timing information.

6. The method according to claim **1,** further comprising:
receiving a dedicated message from the traffic management system of the unmanned aerial vehicle, wherein the dedicated message includes at least one of updated location information or updated timing information.

7. The method according to claim 1, further comprising:
receiving from a radio access network an indication that at least one of the location information or the timing information of the planned route of the unmanned aerial vehicle is not preferable; and
forwarding the indication that the planned route is not preferable to at least one of the unmanned aerial vehicles or the traffic management system.

8. An apparatus comprising means for performing a process, the process including the method according to any of claims 1-7.

9. A computer program product encoding instructions which, when executed by a computer, cause the computer to carry out the method according to any of claims 1-7.

## Patentansprüche

1. Verfahren, das Folgendes umfasst:
Empfangen (510) einer Verbindungsherstellungsanforderung an einer Mobilfunkverwaltungsentität (102, 302, 402) von einem Verkehrsverwaltungssystem eines unbemannten Luftfahrzeugs, wobei sich das Verkehrsverwaltungssystem auf einem Anwendungsserver außerhalb des zellularen Netzwerks befindet, und wobei die Anforderung Standortinformationen und Timinginformationen einer geplanten Route für das unbemannte Luftfahrzeug umfasst; und
Herstellen (550) einer Verbindung zwischen dem unbemannten Luftfahrzeug und einem zellularen Netzwerk via die Mobilfunkverwaltungsentität auf Basis der Verbindungsherstellungsanforderung.

2. Verfahren nach Anspruch 1, wobei die Standortinformationen mindestens eines von einer Zellkennung oder einer Basisstationskennung, einem Betriebsbereich oder Geostandortinformationen umfassen.

3. Verfahren nach Anspruch 1, wobei die Timinginformationen eine Spanne einer erwarteten Ankunftszeit an einem gegebenen Standort oder einer Spanne einer erwarteten Zeit des Betriebs des unbemannten Luftfahrzeugs in einem gegebenen Bereich umfassen.

4. Verfahren nach Anspruch 1, das ferner Folgendes umfasst:
Speichern von mindestens einem der Standortinformationen oder der Timinginformationen an der Mobilfunkverwaltungsentität, wobei die Verbindungsherstellungsanforderung eine Anzeige umfasst, dass die Standortinformationen für eine künftige Route des unbemannten Luftfahrzeugs verwendet werden.

5. Verfahren nach Anspruch 1, wobei das Herstellen der Verbindung Folgendes umfasst:
Übertragen einer weiteren Anforderung von der Mobilfunkverwaltungsentität zu einer Basisstation im Netzwerk, wobei die weitere Anforderung mindestens eines der Standortinformationen oder der Timinginformationen umfasst.

6. Verfahren nach Anspruch 1, das ferner Folgendes umfasst:
Empfangen einer dedizierten Nachricht vom Verkehrsverwaltungssystem des unbemannten Luftfahrzeugs, wobei die dedizierte Nachricht mindestens eines von aktualisierten Standortinformationen oder aktualisierten Timinginformationen beinhaltet.

7. Verfahren nach Anspruch 1, das ferner Folgendes umfasst:
Empfangen einer Anzeige, dass mindestens eines der Standortinformationen oder der Timinginformationen der geplanten Route des unbemannten Luftfahrzeugs nicht bevorzugt ist, von einem Funkzugangsnetzwerk; und
Weiterleiten der Anzeige, dass die geplante Route nicht bevorzugt ist, zu mindestens einem des unbemannten Luftfahrzeugs oder des Verkehrsverwaltungssystems.

8. Vorrichtung, die Mittel zum Durchführen eines Prozesses umfasst, wobei der Prozess das Verfahren nach einem der Ansprüche 1 bis 7 beinhaltet.

9. Computerprogrammprodukt, auf dem Anweisungen codiert sind, die, wenn sie von einem Computer ausgeführt werden, den Computer veranlassen, das Verfahren nach einem der Ansprüche 1 bis 7 umzusetzen.

## Revendications

1. Procédé comprenant :
la réception (510) d'une demande d'établissement de connexion à une entité de gestion mobile (102, 302, 402) en provenance d'un système de gestion de trafic d'un véhicule aérien sans pilote, le système de gestion de trafic étant situé sur un serveur d'application à l'extérieur du réseau cellulaire, et dans lequel la demande comprend des informations d'emplacement et des informations de temporisation d'un itinéraire planifié pour le véhicule aérien sans pilote ; et
l'établissement (550) d'une connexion entre le véhicule aérien sans pilote et un réseau cellulaire via l'entité de gestion mobile sur la base de la demande d'établissement de connexion.

2. Procédé selon la revendication 1, dans lequel les informations d'emplacement comprennent au moins un parmi un identifiant de cellule ou un identifiant de station de base, une zone de fonctionnement, ou des informations de géolocalisation.

3. Procédé selon la revendication 1, dans lequel les informations de temporisation comprennent une plage de temps d'arrivée attendue à un emplacement donné ou une plage de temps attendue pour le fonctionnement du véhicule aérien sans pilote dans une zone donnée.

4. Procédé selon la revendication 1, comprenant en outre :
le stockage d'au moins une parmi des informations d'emplacement ou des informations de temporisation au niveau de l'entité de gestion mobile, dans lequel la demande d'établissement de connexion comprend une indication selon laquelle les informations d'emplacement seront utilisées pour un itinéraire futur du véhicule aérien sans pilote.

5. Procédé selon la revendication 1, dans lequel l'établissement de la connexion comprend :
la transmission d'une autre demande de l'entité de gestion mobile à une station de base dans le réseau, dans lequel l'autre demande comprend au moins une parmi les informations d'emplacement ou les informations de temporisation.

6. Procédé selon la revendication 1, comprenant en outre :
la réception d'un message dédié du système de gestion de trafic du véhicule aérien sans pilote, dans lequel le message dédié comporte au moins une parmi des informations d'emplacement mises à jour ou des informations de temporisation mises à jour.

7. Procédé selon la revendication 1, comprenant en outre :
la réception, en provenance d'un réseau d'accès radio, d'une indication selon laquelle au moins une parmi les informations d'emplacement ou les informations de temporisation de l'itinéraire planifié du véhicule aérien sans pilote ne sont pas préférables ; et
le transfert de l'indication selon laquelle l'itinéraire planifié n'est pas préférable à au moins un parmi les véhicules aériens sans pilote ou le système de gestion de trafic.

8. Appareil comprenant des moyens pour réaliser un processus, le processus comportant le procédé selon l'une des revendications 1 à 7.

9. Produit de programme informatique codant des instructions qui, lorsqu'elles sont exécutées par un ordinateur, amènent l'ordinateur à mettre en œuvre le procédé selon l'une des revendications 1 à 7.
